Europäisches Patentamt

**European Patent Office**

**Office européen des brevets**

(11) Publication number: **0 129 964**

**A1**

## (12) EUROPEAN PATENT APPLICATION

(21) Application number: **84302570.1**

(22) Date of filing: **16.04.84**

(51) Int. Cl.⁴: **B 60 T 11/10**
**B 62 D 11/08**

(30) Priority: **25.05.83 GB 8314510**

(43) Date of publication of application:
**02.01.85 Bulletin 85/1**

(84) Designated Contracting States:
**DE FR GB IT**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Bailey, Walter William**
**5 Erica Drive Whitnash**
**Leamington Spa Warwickshire(GB)**

(74) Representative: **Cundy, Anthony Brian**
**Anthony Cundy & Company 384 Station Road Dorridge**
**Solihull West Midlands B93 8ES(GB)**

(54) Hydraulic brake system.

(57) The invention is concerned with a hydraulic system for brakes of a vehicle in which right and left wheel brakes are operable individually or in unison and further braking is to be operated when said right and left brakes are operated together but is to remain unoperated when only the right or left brakes are operated. The system comprises an actuator (31) (e.g. a trailer brake valve) for the further braking having a plunger (32) with a range of free travel (30) before additional movement actuates the further braking. A beam (34) is rockable with respect to the plunger. Hydraulic supplies (16 and 17) which also operate the first mentioned brakes operate hydraulic actuators (35 and 36) at opposite ends of the beam (34) so that either actuator (35 or 36) can rock the beam about the other actuator and partially operate the plunger (32). A restricted gap (38) for the beam (34) limits this movement. Only when both first mentioned brakes are applied and thus both actuators (35 and 36) are operated can the beam (34) move the plunger (32) sufficiently far to actuate the further braking.

FIG 2

## Hydraulic Brake System

The invention relates to hydraulic systems for brakes of vehicles in which left and right brakes are operable individually or in unison and further braking is to be operated when said right and left brakes are operated together but is to remain unoperated when only right or only left brakes are operated.

Such a requirement arises in connection with agricultural tractors equipped with trailers. In order to assist steering manoeuvres for agricultural tractors it is desirable to be able to apply at least one brake on that side of the tractor which will be at the inside of a turn whilst leaving the brakes at the outside of the turn unbraked. During such a manoeuvre, it is desired that additional brakes such as those of a trailer towed by the tractor should not be operated. There is also a requirement for effective normal braking with equal hydraulic pressures applied to the two sides of the tractor and with the trailer brakes actuated. The normal way to provide for independent right and left side braking is to have two independent master cylinders, one for each side of the vehicle and two brake pedals operating the master cylinders which can be coupled together or operated independently. It is also important to provide some means for equalising the pressures when the brakes are operated in unison.

It has already been proposed, for example in European Patent Publication 0 030 883 to provide such a system and an object of the present invention is to provide a corresponding system of a simple and reliable construction.

According to the present invention there is provided a hydraulic system for the brakes of a vehicle in which right and left. brakes are operable independently or in unison and further braking is operated when said right and left brakes are operated together but is to remain unoperated when only right or only left brakes are operated, the system comprising an actuator for the further braking having a plunger with a range of free travel before additional movement actuates the further braking, a beam extending transversely of the plunger and rockable with respect to the plunger, a first hydraulic actuator operated by the hydraulic supply to the right brakes acting on the beam in a direction to operate the plunger at a position offset from the plunger, a second hydraulic actuator operated by the hydraulic supply to the left brakes acting on the beam in a direction to operate the plunger at a position offset to the oppposite side of the plunger and means for restricting movement of each actuator to no more than twice the range of free movement of the plunger. In this way, when the brakes at one side of the vehicle are operated, one actuator only is operated and the central portion of the beam moves through only half the range of movement of the actuator. This keeps the plunger within the range of movement over which there is free play.

An embodiment of the invention will now be described with reference to the accompanying drawings in which:

Figure 1 shows a master cylinder arrangement of the hydraulic system;

and

Figure 2 shows the connection to a trailer braking system.

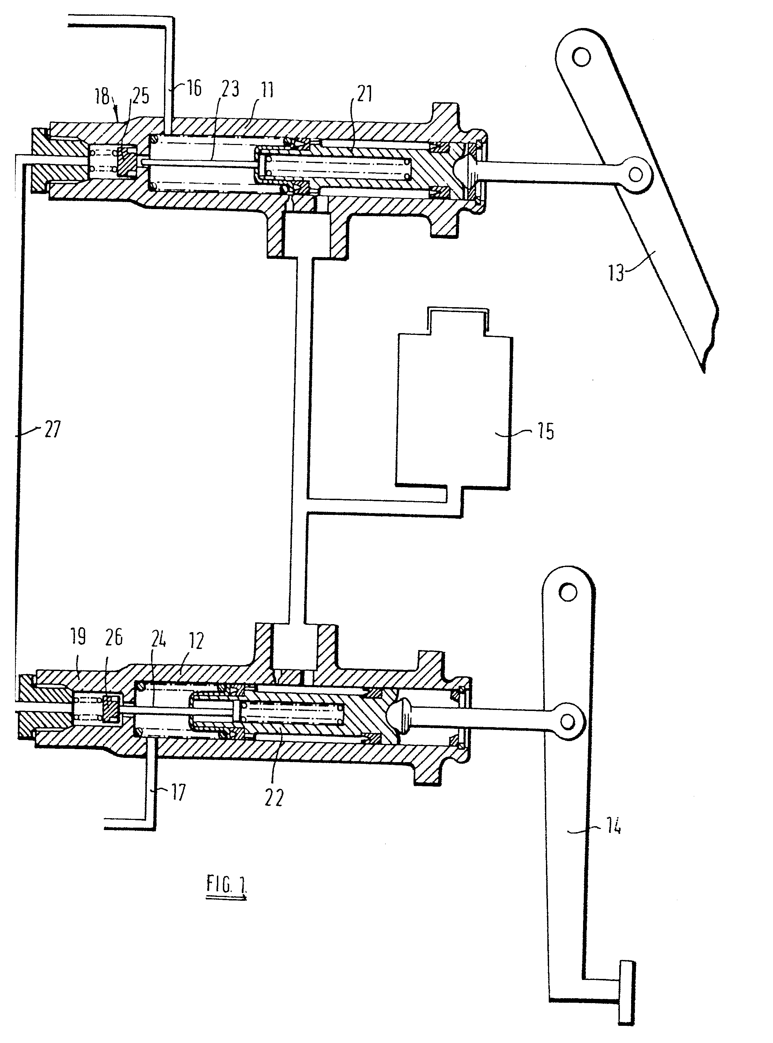

The arrangement shown in Figure 1 incorporates two master cylinders 11 and 12 operated respectively by a righthand side brake pedal 13 and a lefthand side brake pedal 14. A common reservoir 15 supplies both master cylinders. An output 16 from master cylinder 13 leads to the righthand brakes and output 17 from master cylinder 12 leads to the lefthand brakes.

The two master cylinders are provided with a pressure balance system which is operative when both master cylinders are operated in unison but which interrupts communication between the two master cylinders
when only one is operated.  The pressure balance system
is made up of two transfer valves 18 and 19, in line with
the master cylinder pistons 21 and 22 respectively so
that the valves can be operated by pushrods 23 and 24
when the pistons are operated.  The pushrods are spring-
loaded with respect to the pistons so that piston movement
can continue when the pushrods come up against positive
stops.  Each valve incorporates a spring-loaded sealing
member 25, 26 respectively.  Each transfer valve operates
as a non-return valve when it is allowed to engage its
seat in that hydraulic fluid flowing from the master
cylinder concerned lifts the sealing member from its seat
but flow into the master cylinder through the transfer
valve is prevented because pressure which would provide
such flow seats the sealing member.  Pushrods 23 and 24
are arranged to lift their respective sealing member 25
and 26 to allow free flow through a transfer connection
27 between the transfer valves when both master cylinders
are operated.  This ensures balance between the pressures
in the righthand and lefthand parts of the system when
both parts are operated.  When only one brake pedal is
operated, for example pedal 14 as illustrated, its
associated transfer valve 19 is opened but transfer valve
18 remains closed and is held firmly closed by pressure
developed in connection 27 from the lefthand section.  A similar arrangement occurs in reverse when only the righthand pedal is operated.

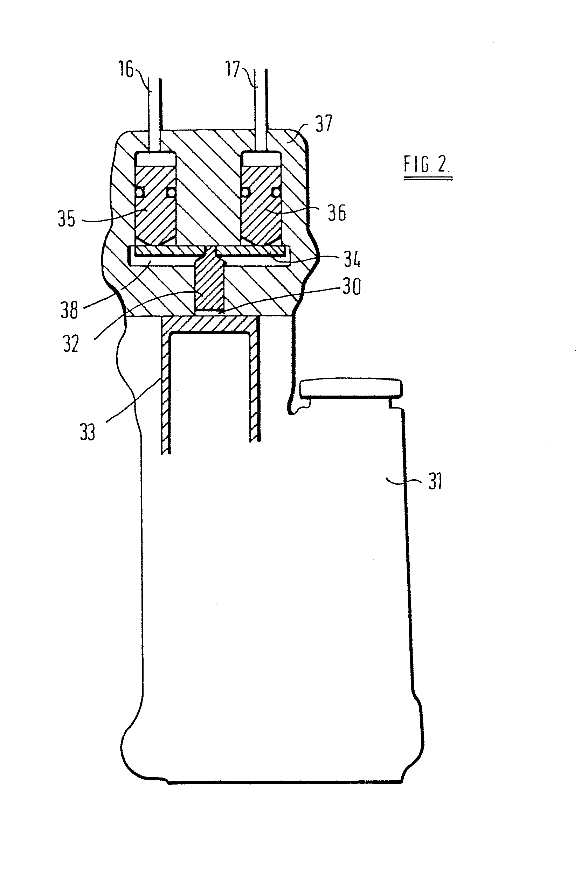

In addition to supplying the right and lefthand brakes respectively, outlets 16 and 17 lead to and form inlets to an actuation system for trailer brakes as shown in Figure 2. In Figure 2, a conventional trailer brake operating valve 31 is shown in outline. Actuation of the trailer valve is normally by pressure applied to displace a plunger 32. There is a degree of lost-motion in the actuation of the trailer valve and this is represented purely diagrammatically by a space 30 between plunger 32 and another member 33 against which it bears to operate the brakes. The arrangement of conventional valve 31 is that movement of plunger 32 beyond the initial lost-motion progressively applies the brakes of a trailer to which the valve 31 is mounted. The trailer valve may for example be as shown in Figure 3 of published UK Patent Application GB 2 036 216 A with plunger 32 of the present application replacing the piston of slave cylinder 76 of said published application.

In accordance with the present invention plunger 32 carries a transversely extending beam 34 which is free to rock on the plunger 32. Two actuators 35 and 36 act on the beam 34 in a direction parallel to the line of action of plunger 32 but spaced out equally on opposite sides of the plunger axis. Actuators 35 and 36 are hydraulic pistons arranged in cylinders in an additional housing 37 and connected to lines 16 and 17 which are the outlets from the master cylinders as shown in Figure 1 and form the inlets to the actuator cylinders.

When both master cylinders are operated together, equal forces are applied by the two actuators 35 and 36 to the beam 34 which can advance the plunger 32 through any required distance up to a range of movement of the actuators set by a gap 38. Gap 38 represents a distance which must be at least equal to the operating stroke of plunger 32 but must be no more than twice the range of free movement 30 of the plunter 32. During brake operation, beam 34 advances across the gap 38 under the influence of actuators 35 and 36 and thus moves plunger 32 beyond its free movement to actuate the trailer brakes.

When only one brake pedal is operated, for example the lefthand pedal, actuator 17 only is operated while actuator 16 remains as shown. This causes the beam 34 to rock in such a way that the end associated with actuator 36 moves through the whole of gap 38 while the opposite end of the beam is not moved. The beam rocks on plunger 32 and causes movement of the plunger within the range of available free movement. Thus the trailer brakes are not operated.

Similarly, operation of the righthand brake only moves actuator 35 but not actuator 36 and thus moves the plunger within its range of free movement. In this way, it is only when both master cylinders are operated that the trailer brake valve 31 is operated in such a way as to apply the trailer brakes.

Although the invention has been described in relation to trailer brakes as the further braking to be operated only when right and left brakes are operated, the system could also be applied to a tractor or other vehicle in which the rear wheel brakes are to be operable independently to assist steering but the front wheel brakes are to be operated only when both rear brakes are operated in unison. In such a case, brake operating valve 31 or its equivalent, would operate both front wheel brakes of the vehicle.

0129964

CLAIMS

1.          A hydraulic system for the brakes of a vehicle in which right and left brakes are operable individually or in unison and further braking is to be operated when said right and left brakes are operated together but is to remain unoperated when only right or only left brakes are operated, the system comprising an actuator (31) for the further braking having a plunger (32) with a range of free travel (30) before additional movement actuates the further braking, characterised in that a beam (34) extends transversely of the plunger and is rockable with respect the the plunger, a first hydraulic actuator (35) is operated by the hydraulic supply (16) to the right brakes acting on the beam in a direction to opeate the plunger at a position offset from the plunger, a second hydraulic actuator (36) is operated by the hydraulic supply (17) to the left brakes acting on the beam in a direction to operate the plunger at a position offset to the opposite side of the plunger and means (gap 38) is provided restricting movement of each actuator.

2.          A hydraulic system as claimed in claim 1 characterised in that the restricted movement (38) of each actuator is no more than twice the range of free movement (30) of the plunger.

3.      A hydraulic system as claimed in claim 1 or claim 2 characterised in that the additional braking is the braking of a trailer.

4.      A hydraulic system as claimed in any preceding claim characterised by provision of a pressure balance system (18, 19, 23, 24, 25, 26, 27) between the supplies (16, 17) to the right brakes and left brakes which is operable when right and left brakes are operated together.

0129964

FIG. 1

FIG. 2.

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int Cl 3) |
|---|---|---|---|
| X | DE-A-2 909 279 (TEVES) <br> * Page 12, line 7 - page 13; figure 2 * | 1,2,4 | B 60 T 11/10 <br> B 62 D 11/08 |
| A | DE-A-2 030 838 (WESTINGHOUSE BREMSEN- UND APPARATEBAU) <br> * Page 4, lines 1-23; figures 1, 2 * | 1,3 | |
| A | US-A-2 741 337 (ZISKAL) | | |
| D,A | EP-A-0 030 883 (D.B.A.) | | |

----

**TECHNICAL FIELDS SEARCHED (Int. Cl. 3)**

B 60 T 11/00
B 62 D 11/00

The present search report has been drawn up for all claims

| Place of search <br> BERLIN | Date of completion of the search <br> 21-08-1984 | Examiner <br> LUDWIG H J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82